# EUROPÄISCHE PATENTSCHRIFT

(11) **EP 3 111 106 B1**
(45) Veröffentlichungstag und Bekanntmachung des Hinweises auf die Patenterteilung: **12.12.2018**
(21) Anmeldenummer: 15707267.9
(22) Anmeldetag: 30.01.2015
(51) Int. Cl.: F16F 15/14

(54) **FLIEHKRAFTPENDEL**
CENTRIFUGAL PENDULUM
PENDULE CENTRIFUGE

(30) Priorität: 24.02.2014 DE 102014203220
(43) Veröffentlichungstag der Anmeldung: 04.01.2017
(73) Patentinhaber: Schaeffler Technologies AG & Co. KG, 91074 Herzogenaurach (DE)
(72) Erfinder: MAIENSCHEIN, Stephan, 76534 Baden-Baden (DE); MOVLAZADA, Parviz, 76437 Rastatt (DE)
(86) Internationale Anmeldenummer: PCT/DE2015/200049
(87) Internationale Veröffentlichungsnummer: WO 2015/124153

(56) Entgegenhaltungen:
- GB-A- 444 222
- JP-A- 2012 057 701
- US-A- 3 296 887
- US-A1- 2011 180 358

## Beschreibung

Die Erfindung betrifft ein Fliehkraftpendel mit einem um eine Drehachse drehbaren Pendelflansch und wenigstens einer Pendelmasse, wobei wenigstens ein Führungsmittel vorgesehen ist, das wenigstens einen am Pendelflansch angeordneten Ausschnitt umfasst, wobei das Führungsmittel ausgebildet ist, die Pendelmasse in einer Pendelbewegung an dem Pendelflansch begrenzt bewegbar zu führen.

An Wellen von periodisch arbeitenden Maschinen, z. B. an einer Kurbelwelle eines Verbrennungsmotors eines Kraftfahrzeugs, treten bei einer Rotationsbewegung der Welle überlagernde Drehschwingungen auf, wobei sich deren Frequenz mit einer Drehzahl der Welle ändert. Durch Verbrennungsvorgänge des Verbrennungsmotors werden insbesondere im Zugbetrieb Drehschwingungen im Antriebsstrang des Kraftfahrzeugs angeregt. Zur Verringerung dieser Drehschwingungen kann ein Fliehkraftpendel vorgesehen sein, das Drehschwingungen über einen größeren Drehzahlbereich des Verbrennungsmotors, idealerweise über dessen gesamten Drehzahlbereich hinweg, tilgen kann. Den Fliehkraftpendeln liegt das Prinzip zugrunde, dass deren Pendelmassen fliehkraftbedingt bestrebt sind, eine Rotationsachse bei Einleitung einer Drehbewegung in größtmöglichem Abstand zu umkreisen. Die Drehschwingungen in der Welle führen zu einer pendelnden Relativbewegung der Pendelmassen, wobei das Fliehkraftpendel eine zur Drehzahl proportionale Eigenfrequenz besitzt, so dass Drehschwingungen mit Frequenzen, die der Drehzahl der Welle in gleicher Weise proportional sind, über einen großen Drehzahlbereich hinweg tilgbar sind.

Derartige Fliehkraftpendel sind beispielsweise als Drehschwingungstilger in ihrer Wirkungsweise insbesondere aus dem Einsatz in Antriebssträngen von Kraftfahrzeugen beispielsweise aus der DE 10 2004 011 830 A1 bekannt. Hier werden Pendelmassen begrenzt schwenkbar an einem Pendelflansch angeordnet. Dabei bewegen sich Abstandselemente in Ausschnitten im Pendelflansch, die bezüglich ihrer Form der Pendelbewegung der Pendelmassen angepasst sind. Die Führung der Pendelmassen an dem Pendelflansch erfolgt ferner mittels in diesen eingebrachten Führungsbahnen, beispielsweise in Form von bogenförmigen Durchgangsöffnungen, die komplementär zu Führungsbahnen in dem Pendelflansch ausgebildet sind, wobei in den Führungsbahnen Führungsmittel abrollen. Die Pendelmassen können entlang dieser vorgegebenen Führungsbahnen eine Relativbewegung zum Pendelflansch ausführen und dabei einen variablen Abstand zur Rotationsachse des Pendelflansches einnehmen. Als eine Folge der Drehschwingungen im Antriebsstrang werden die Pendelmassen zum Pendeln bzw. Schwingen angeregt, wobei sich deren Schwerpunkte permanent und zeitversetzt zu den Drehschwingungen im Antriebsstrang verändern, was durch eine mechanische Rückkopplung eine Dämpfung der Drehschwingungen bewirkt. Eine effiziente Dämpfung kann durch entsprechende Abstimmung der Pendelmassen und deren Führungsbahnen erfolgen. Infolge der durch unterschiedliche Drehbeschleunigung des Pendelflansches bewirkten Pendelbewegung der Pendelmassen gegenüber dem Pendelflansch tritt ein Tilgungseffekt der Drehschwingungen ein.

Weitere Beispiele derartiger Fliehkraftpendel sind in den Dokumenten US 2011/180358 A1, US 3 296 887 A, GB 444 222 und JP 2012 057701 A zu finden, wobei die Merkmale des Oberbegriffs des Anspruchs 1 offenbart werden.

Dabei erweist es sich als nachteilig, dass es während des Betriebes der Fliehkraftpendeleinrichtung, insbesondere bei besonders hohen Drehzahlen des Pendelflansches zu Mikroschwingungen der Pendelmassen kommen kann, die dauerhaft Beschädigungen der Führungsbahnen und/oder der Führungsmittel verursachen können. Ferner kann es zu einem Anstoßen der Pendelmassen am Pendelflansch, einem Aneinanderstoßen der in Umfangsrichtung benachbarten Stirnseiten der Pendelmassen und/oder einem Anstoßen der Führungselemente in den betreffenden Längsenden der Führungsbahnen des Pendelflansches und/oder der Pendelmassen kommen, wodurch Funktionsstörungen des Fliehkraftpendels und Geräusche hervorgerufen werden, was zu einem subjektiv wahrnehmbaren Verlust an Fahr- und Geräuschkomfort führt.

Es ist daher Aufgabe der Erfindung, ein verbessertes Fliehkraftpendel bereitzustellen, das ein verbessertes Geräuschverhalten aufweist und Beschädigungen an den Führungsbahnen und/oder den Führungsmitteln zumindest reduziert.

Erfindungsgemäß wurde erkannt, dass ein verbessertes Fliehkraftpendel dadurch bereitgestellt werden kann, dass das Fliehkraftpendel einen um eine Drehachse drehbaren Pendelflansch und wenigstens eine Pendelmasse umfasst. Das Fliehkraftpendel weist wenigstens ein Führungsmittel auf, wobei das Führungsmittel wenigstens einen am Pendelflansch angeordneten Ausschnitt umfasst und ausgebildet ist, die Pendelmasse in einer Pendelbewegung an dem Pendelflansch begrenzt bewegbar zu führen. Dabei ist wenigstens ein Sperrelement vorgesehen, wobei das Sperrelement in Abhängigkeit von einer vordefinierten Drehzahl des Pendelflansches die Pendelmasse mit dem Pendelflansch in Umfangsrichtung arretiert und eine Pendelbewegung der Pendelmasse relativ zum Pendelflansch in Abhängigkeit der vordefinierten Drehzahl zumindest teilweise verhindert.

Auf diese Weise wird gewährleistet, dass die Pendelmasse durch das Sperrelement und die Arretierung des Abstandsbolzens in seinem Pendelvorgang blockiert ist und somit bei vordefinierte Drehzahlen zum einen Mikroschwingungen der Pendelmassen und damit die dauerhafte Beschädigungen der Führungsbahnen und/oder der Führungsmittel und zum anderen ein Anstoßen der Pendelmassen am Pendelflansch und/oder ein Aneinanderstoßen der in Umfangsrichtung benachbarten Stirnseiten der Pendelmassen und/oder ein Anstoßen der Führungselemente in den betreffenden Längsenden der Führungsbahnen des Pendelflansches und/oder der Pendelmassen und dadurch Funktionsstörungen des Fliehkraftpendels und Geräusche verhindert werden können, wodurch das Fliehkraftpendel insgesamt geräuschärmer und langlebiger ist.

Erfindungsgemäß weist das Führungsmittel wenigstens ein Verbindungselement, vorzugsweise ein Abstandselement, auf, wobei wenigstens zwei am Pendelflansch in axialer Richtung gegenüberliegend angeordnete Pendelmassen über das Führungsmittel miteinander verbundenen sind und das Sperrelement das Verbindungselement mit dem Pendelflansch in Umfangsrichtung arretiert.

In einer weiteren Ausführungsform erfolgt die Arretierung des Verbindungselement zwischen der Pendelmasse mit dem Pendelflansch. Wobei vorteilhafterweise das Sperrelemente eine Vertiefung aufweist die zur Aufnahme des Abstandselement ausgebildet ist. Dabei ist die Öffnung der Vertiefung bevorzugt korrespondierend zum Verbindungselement angeordnet, wobei es besonders vorteilhaft ist, wenn die Ausführungsform des Verbindungselementes mit der Vertiefungskontur der Vertiefung zumindest abschnittsweise übereinstimmt, so dass beispielsweise eine zumindest teilweise bogenförmige Vertiefung ein rundes Verbindungselement oder eine eckig ausgeführte Vertiefung auch ein eckiges Verbindungselement aufnehmen kann.

In einer bevorzugten Ausführungsform ist das Sperrelemente zumindest teilweise im Ausschnitt angeordnet, so dass der Einbau des zusätzlichen das Sperrelementes ohne zusätzlichen Bauraum und damit kostengünstig erfolgen kann.

In einer weiteren Ausführungsform ist die Vertiefung in Umfangsrichtung in mittiger Lage des Ausschnittes des Pendelflansches angeordnet. Auf diese Weise können die Pendelmassen in einer neutralen, mittigen Position arretiert werden, so dass die Ausgestaltung eine einfache Blockierung in Umfangsrichtung gewährleistet und eine Pendelbewegung der Pendelmassen verhindert.

In einer weiteren Ausführungsform das Sperrelement wenigstens ein Federelement umfasst, wobei das Federelement dazu ausgebildet ist, die Vertiefung auf das Verbindungselemente zu pressen, wobei in Abhängigkeit der Drehzahl des Pendelflansches das Federelement die Verpressung aufhebt und die Lage der Vertiefung des Sperrelementes in radialer Richtung verändert. Auf diese Weise kann das Verbindungselement besonders gut durch das Federelement arretiert werden.

In einer weiteren Ausführungsform umfasst das Sperrelement wenigstens eine Zusatzmasse. Auf diese Weise wird gewährleistet, dass auch bei einer hohen Federkraft des Federelements eine hinreichend starke Gegenkraft zu der Anpresskraft des Federelementes bereitgestellt werden kann, um die Arretierung des Abstandelementes durch das Sperrelement bei niedrigen und/oder bei hohen Drehzahlen zu lösen.

In einer weiteren Ausführungsform ist die Zusatzmasse zwischen dem Federelement und dem Verbindungselement angeordnet, wobei vorzugsweise die Vertiefung zur Aufnahme des Verbindungselement zumindest teilweise in der Zusatzmasse angeordnet ist. Auf diese Weise kann eine besonders gute und mechanisch stabile Kopplung zwischen der Zusatzmasse und dem Abstandelement bereitgestellt werden, wodurch eine besonderes gute Arretierung der Pendelbewegung bei den vordefinierten Drehzahlen gewährleistet werden kann.

Erfindungsgemäß arretiert das Sperrelement unterhalb einer ersten Grenzdrehzahl des Pendelflansches das Verbindungselement mit dem Pendelflansch in Umfangsrichtung und gibt das Verbindungselement bei Überschreiten der ersten Grenzdrehzahl frei. Auf diese Weise kann das Anschlagen der Pendelmassen unterhalb der Grenzdrehzahl vermieden und somit das Geräuschverhalten des Fliehkraftpendels verbessert werden.

In einer weiteren Ausführungsform arretiert das Sperrelement oberhalb einer zweiten Grenzdrehzahl des Pendelflansches das Verbindungselement mit dem Pendelflansch in Umfangsrichtung arretiert und gibt das Verbindungselement bei Unterschreiten der zweiten Grenzdrehzahl frei. Auf diese Weise können Beschädigungen der Führungsbahnen und/oder der Führungsmittel durch Mikroschwingungen oberhalb der Grenzdrehzahl vermieden und somit die Nutzungsdauer des Fliehkraftpendels verbessert werden.

In einer weiteren Ausführungsform ist das Sperrelement über wenigstens ein erstes Verbindungsmittel an dem Pendelflansch befestigt und/oder über wenigstens ein zweites Verbindungsmittel mit der Zusatzmasse verbunden. Grundsätzlich sind sowohl lösbare Verbindungen, wie zum Beispiel Schraubverbindung oder Klettverschluss als auch nicht lösbare Verbindungen wie beispielsweise ein Nietverbindung, eine Schweißverbindung oder eine Klebeverbindung umsetzbar, wobei als Verbindungsmittel im Sinne der Erfindung insbesondere Clipse, auch in Form von clipartigen Verbindungsmitteln oder Klemm-Muttern, aber auch Schrauben, Nieten, Muttern, Bolzen verwendet werden können. Auf diese Weise kann eine einfache Lagesicherung des Sperrelementes und/oder der Zusatzmasse gewährleistet werden.

In einer weiteren Ausführungsform weist der Ausschnitt des Pendelflansches eine Ausschnittskontur auf, wobei die Ausschnittskontur ferner wenigstens eine Aussparung zur Aufnahme der Vertiefung des Sperrelementes aufweist, so dass gewährleistet ist, dass der Ausschnitt am Pendelflansch nachdem das Federelement in Abhängigkeit der Drehzahl des Pendelflansches die Verpressung des Abstandelementes aufgehoben und sich die Lage der Vertiefung des Sperrelementes in radialer Richtung verändert hat freigegeben und eine Pendelbewegung der Pendelmassen relativ zum Pendelflansch in Abhängigkeit der Drehzahl des Pendelflansches ungehindert stattfinden kann.

Vorteilhafterweise begrenzt das Sperrelement den Ausschnitt des Pendelflansches nach radial außen und zumindest teilweise in Umfangsrichtung.

Weitere Merkmale, Anwendungsmöglichkeiten und Vorteile der Erfindung ergeben sich aus der nachfolgenden Beschreibung der Ausführungsbeispiele der Erfindung, welche in den Zeichnungen dargestellt sind. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen nur einen beschreibenden Charakter haben und nicht dazu gedacht sind, die Erfindung in irgendeiner Form einzuschränken, wie sie in den Ansprüchen definiert ist.

Nachfolgend wird die Erfindung anhand von Figuren näher erläutert. Dabei werden gleiche Bauteile mit gleichen Bezugszeichen benannt. Dabei zeigen:
- Fig. 1: eine perspektivische Ansicht eines Fliehkraftpendels in einer ersten Ausführungsform;
- Fig. 2: eine schematische Detailansicht von Ausschnitt A aus Fig. 1 in einer ersten Ausführungsform in einem ersten Betriebszustand des Fliehkraftpendels;
- Fig. 3: eine schematische Detailansicht von Ausschnitt A aus Fig. 1 in der ersten Ausführungsform in einem zweiten und oder einem dritten Betriebszustand des Fliehkraftpendels;
- Fig. 4: eine schematische Detailansicht von Ausschnitt A aus Fig. 1 in einer zweiten Ausführungsform im ersten oder zweiten Betriebszustand des Fliehkraftpendels;
- Fig. 5: eine schematische Detailansicht von Ausschnitt A aus Fig. 1 in der zweiten Ausführungsform im dritten Betriebszustand des Fliehkraftpendels;
- Fig. 6: eine schematische Detailansicht von Ausschnitt A aus Fig. 1 in einer dritten Ausführungsform im ersten Betriebszustand des Fliehkraftpendels;
- Fig. 7: eine schematische Detailansicht von Ausschnitt A aus Fig. 1 in der dritten Ausführungsform im zweiten Betriebszustand des Fliehkraftpendels;
- Fig. 8: eine schematische Detailansicht von Ausschnitt A aus Fig. 1 in der dritten Ausführungsform im dritten Betriebszustand des Fliehkraftpendels;
- Fig. 9: eine schematische Detailansicht von Ausschnitt A aus Fig. 1 in einer vierten Ausführungsform im ersten Betriebszustand des Fliehkraftpendels;
- Fig. 10: eine schematische Detailansicht von Ausschnitt A aus Fig. 1 in der vierten Ausführungsform im zweiten oder dritten Betriebszustand des Fliehkraftpendels; und
- Fig. 11: eine schematische Detailansicht von Ausschnitt A aus Fig. 1 in einer fünften Ausführungsform im ersten Betriebszustand des Fliehkraftpendels.

Das Fliehkraftpendel 100 umfasst eine Drehachse x, um die das Fliehkraftpendel 100 drehbar ist, einen Pendelflansch 110 und mehrere am Pendelflansch 110 gelagerte Pendelmassen 130. Die Pendelmassen 130 sind über mehrere Verbindungselemente verbunden, wobei die Verbindungselemente im dargestellten Ausführungsbeispiel als Abstandselemente 120 ausgebildet sind, wobei jeweils zwei in axialer Richtung gegenüberliegend angeordnete Pendelmassen 130 über wenigstens ein Abstandselement 120, im dargestellten Ausführungsbeispiel über drei Abstandselemente 120, miteinander verbunden sind. Der Pendelflansch 110 weist mehrere über seinen Umfang verteilte Ausschnitte 115 auf, wobei in jedem Ausschnitt 115 jeweils ein Abstandselement 120 angeordnet ist. Die Abstandselemente 120 greifen durch die Ausschnitte 115 in den Pendelflansch 110 hindurch. Die Ausschnitte 115 sind bogenförmig ausgeformt, so dass die paarweise beidseitig des Pendelflansches 110 angeordneten Pendelmassen 130 bei einer schwankenden Drehmomenteinleitung in den Pendelflansch 110 eine zeitliche nachhinkende Pendelbewegung der Pendelmassen 130 gegenüber dem Pendelflansch 110 in Umfangsrichtung entlang einer Pendelbahn durchführen und dadurch das eingeleitete Drehmoment zumindest ausgleichen. Die Pendelmassen 130 sind somit über die bogenförmigen Ausschnitte 115 an dem Pendelflansch 110 gelagert und können während der Pendelbewegung in nierenförmigen erste Ausnehmungen 135 an den Pendelmassen 130 und in komplementär nierenförmigen zweite Ausnehmungen 117 an dem Pendelflansch 110 abrollen, wobei Führungsmittel 140 in den Konturen der ersten Ausnehmungen 135 und der zweiten Ausnehmung 117 durch geführt werden, so dass die Konturen der ersten Ausnehmungen 135 und der zweiten Ausnehmung 117 als Führungsbahnen 145 für die Führungsmittel 140 dienen.

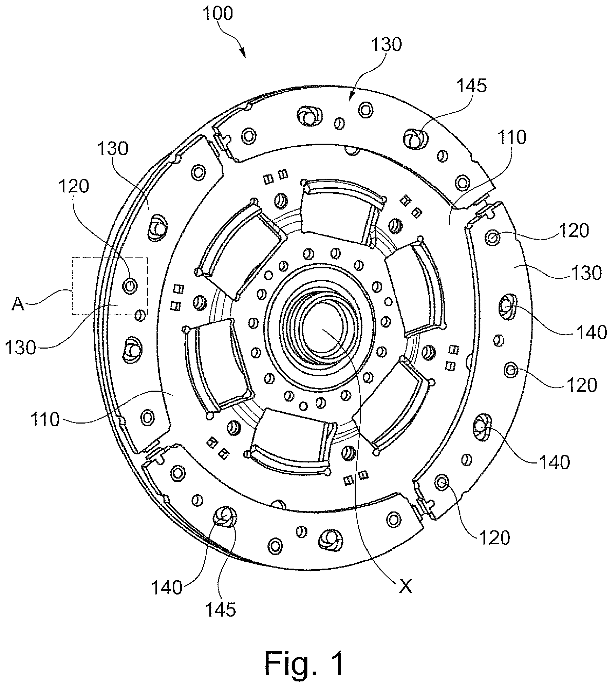

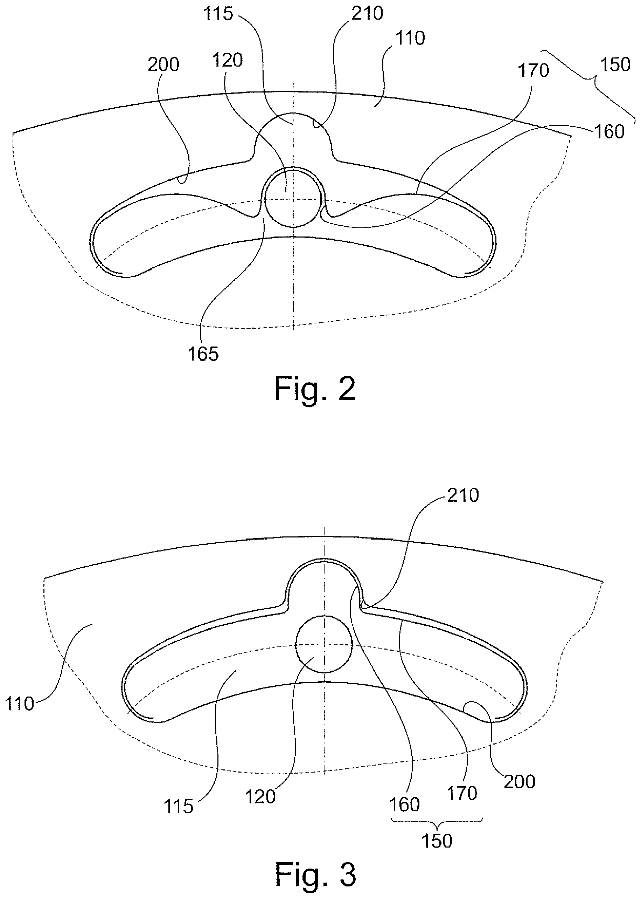

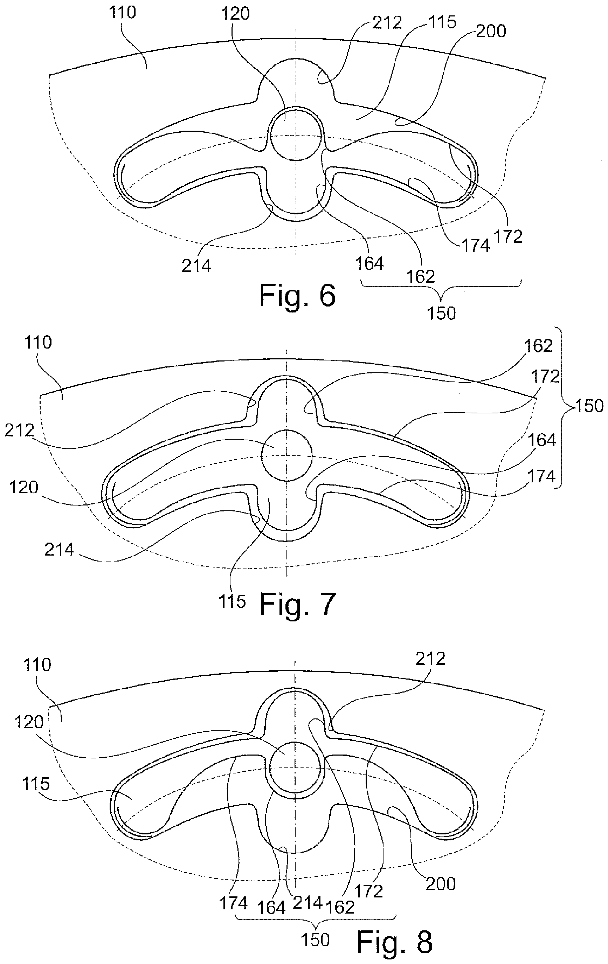

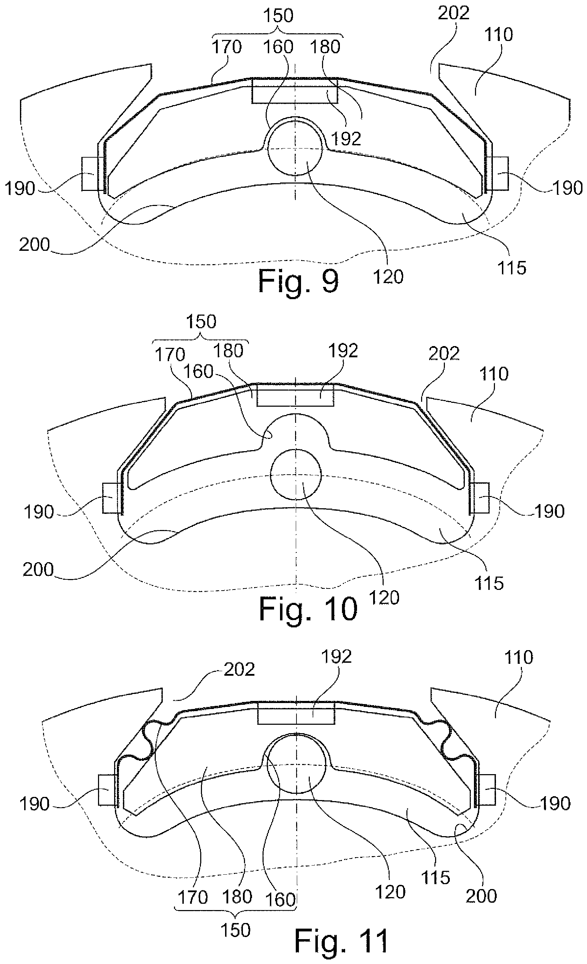

Ferner umfasst das Fliehkraftpendel 100 ein in Figur 1 nicht erkennbares Sperrelement 150. Das Sperrelement 150 arretiert in Abhängigkeit von einer vordefinierten Drehzahl des Pendelflansches 110 die Pendelmasse 130 über das Abstandselement 120 mit dem Pendelflansch 110 in Umfangsrichtung und verhindert dadurch in Abhängigkeit der vordefinierten Drehzahl zumindest teilweise eine Pendelbewegung der Pendelmasse 130 relativ zum Pendelflansch 110. Um das zu gewährleisten kann das Sperrelement 150 entweder, wie in den dargestellten Ausführungsbeispielen, im Ausschnitt 115 oder alternativ außerhalb des Ausschnittes 115 am Pendelflansch angeordnet sein. In den Figuren 2 bis 5 und in den Figuren 9 bis 11 dargestellt, ein Federelement 170 umfassen und zwischen der Pendelmasse 130 und dem Pendelflansch 110 angeordnete sein. Alternativ kann das Sperrelement 150 auch mehrere Federelemente 170, beispielsweise ein erstes Federelement 172 und ein zweites Federelement 174, wie in den Figuren 6 bis 8 dargestellt, aufweisen, wobei die geometrische Ausführungen des Federelementes 170, bzw. der Federelemente 170, 172, 174 in den gezeigten Ausführungsbeispielen nicht zwingend sind und auch andersartig ausfallen können.

Wie in den Figuren 2 bis 11 erkennbar, ist das Sperrelement 150 im Ausschnitt 115 des Pendelflansches 110 angeordnet und umfasst eine Vertiefung 160. Die Vertiefung 160 ist zur Aufnahme des Abstandelementes 120 ausgebildet, wobei vorteilhafterweise eine Öffnung 165 der Vertiefung 160 korrespondierend zum Abstandselement 120 angeordnet ist. Die Ausführungsform der Vertiefung 160 stimmt mit der Ausführungsform des Abstandselementes 120 zumindest abschnittsweise überein, so dass in den dargestellten Ausführungsbeispielen das runde Abstandselement 120 weitestgehend formschlüssig in die bogenförmig ausgeführte Vertiefung 160 aufgenommen wird. Die Vertiefung 160 weist dabei den ihr zugewandten Querschnitt des Abstandselementes 120 auf, um das Abstandselement 120 aufnehmen zu können und eine Bewegung in Umfangsrichtung der Pendelmassen 130 beziehungsweise des Abstandselementes 120 zu verhindern. Alternativ zu der gezeigten runden Ausgestaltung des Abstandselementes 120 beziehungsweise der bogenförmigen Vertiefung 160 ist es auch denkbar, dass das Abstandselement 120 beziehungsweise die korrespondierend ausgebildete Vertiefung 160 einen andersartigen Querschnitt aufweist. So ist beispielsweise denkbar, dass das Abstandselement 120 bzw. die Vertiefung 160 rechteckig, polygonförmig, ellipsenförmig oder dreieckig ausgebildet ist. Somit können sowohl die Vertiefung 160 als auch das Abstandelement 120 geometrisch andersartig ausgebildet sein. Die Vertiefung 160 ist in Umfangsrichtung des Pendelflansches 110 in mittiger Lage des Ausschnittes 115 des Pendelflansches 110 angeordnet. Auf diese Weise können die Pendelmassen 130 in einer neutralen, mittigen Position arretiert werden, so dass die Ausgestaltung eine einfache Blockierung in Umfangsrichtung des Pendelflansches 110 gewährleistet und eine Pendelbewegung der Pendelmassen 130 verhindert. Die Vertiefung 160 kann wie in den Figuren 2 bis 8 sowohl im Bereich des Federelementes 170 als auch unmittelbar durch das Federelement 170 ausgebildet sein, wobei das Federelement 170 im Bereich des Ausschnittes 115 in radialer Richtung zwischen dem Abstandselement 120 und dem Pendelflansch 110 angeordnet ist.

In einem ersten Betriebszustand, der in den Figuren 2, 4, 6, 9 und 11 dargestellt ist, steht oder rotiert das Fliehkraftpendel 100 mit einer geringen Drehzahl unter einer je nach Auslegung des Fliehkraftpendels 100 vordefinierten Grenzdrehzahl n_1. Die Grenzdrehzahl n_1 kann beispielweise 1000 Umdrehungen pro Minute betragen. Alternativ kann n_1 auch 800 Umdrehungen pro Minute oder 600 Umdrehungen pro Minute betragen. Selbstverständlich sind auch andere Grenzdrehzahlen n_1 denkbar.

In einem zweiten Betriebszustand, der in den Figuren 3, 4, 7 und 10 dargestellt ist, rotiert das Fliehkraftpendel 100 mit einer je nach Auslegung des Fliehkraftpendels 100 vordefinierten mittleren Drehzahl zwischen der Grenzdrehzahl n_1 und einer zweiten Grenzdrehzahl n-2, wobei mit einer steigenden Rotation des Fliehkraftpendels 100 um die Drehachse x auf das Sperrelement 150, bzw. auf das Federelement 170 eine Fliehkraft FF radial nach außen wirkt.

In einem dritten Betriebszustand, der beispielsweise in den Figuren 3, 5, 8 und10 dargestellt ist, rotiert das Fliehkraftpendel 100 mit einer derart hohen Drehzahl über der je nach Auslegung des Fliehkraftpendels 100 vordefinierten Grenzdrehzahl n_2.

Die Figuren 2 und 3 zeigen jeweils eine schematische Detailansicht des Ausschnittes A aus Figur 1 in einer ersten Ausführungsform, wobei die Figur 2 den ersten Betriebszustand und die Figur 3 den zweiten oder dritten Betriebszustand des Fliehkraftpendels 100 darstellt.

In dem in Figur 2 dargestellten ersten Betriebszustand steht oder rotiert das Fliehkraftpendel 100 mit einer geringen Drehzahl unter der vordefinierten Grenzdrehzahl n_1. Das Abstandelement 120 befindet sich in der Vertiefung 160 des Sperrelementes 150, wobei das Federelement 170 das Abstandselement 120 gegenüber dem Pendelflansch 110 verspannt. Durch das Federelement 170 wird eine erste Anpresskraft FA1 bereitgestellt, mit der das Abstandselement 120 in die Vertiefung 160 gepresst wird, wodurch das Abstandselement 120 in der Vertiefung 160 arretiert und eine Pendelbewegung der Pendelmassen 130 in Umfangsrichtung verhindert wird. Durch die Arretierung der Pendelmassen 130 wird ein Anschlagen des Abstandselements 120 bei niedrigen Drehzahlen unterhalb der Grenzdrehzahl n_1 an der Kontur des Ausschnittes 115 vermieden, wodurch das Geräuschverhalten des Fliehkraftpendels 100 verbessert wird.

In dem in Figur 3 dargestellten zweiten oder dritten Betriebszustand rotiert das Fliehkraftpendel 100 mit einer mittleren bis sehr hohen Drehzahl, die oberhalb der ersten vordefinierten Grenzdrehzahl n_1 liegt, wodurch die Fliehkraft FF des Sperrelementes 150. bzw. des Federelementes 170 erhöht wird. Die Vertiefung 160 wird in seiner Lage nach radial außen verschoben und in einer Aussparung 210 der Ausschnittskontur 200 der Vertiefung aufgenommen. Dabei verliert das Abstandselement 120 mit steigender Drehzahl des Fliehkraftpendels 100 den Kontakt zur Vertiefung 160. Ist die Fliehkraft FF größer als die erste Anpresskraft FA1, wird das Abstandselement 120 durch das Federelement 170 des Sperrelementes 150 nicht mehr arretiert und die Pendelmassen 130 sind dann in ihrer Bewegung in Umfangsrichtung freigegeben. Dadurch können die Pendelmassen 130 ihre übliche Pendelbewegung geführt durch die Führungsmittel 140 zum Ausgleich von Drehmomentschwankungen eines am Fliehkraftpendel 100 angeschlossenen Verbrennungsmotors durchführen. Auf diese Weise kann gewährleistet werden, dass ein Anstoßen der Pendelmassen 130 am Pendelflansch 110 und/oder ein Aneinanderstoßen der in Umfangsrichtung benachbarten Stirnseiten der Pendelmassen 130 und/oder ein Anstoßen der Führungsmittel 140 in den betreffenden Längsenden der Führungsbahnen 145 des Pendelflansches 110 und/oder der Pendelmassen 130 und dadurch Funktionsstörungen des Fliehkraftpendels 100 und Geräusche verhindert werden können, wodurch das Fliehkraftpendel 100 insgesamt geräuschärmer und langlebiger ist.

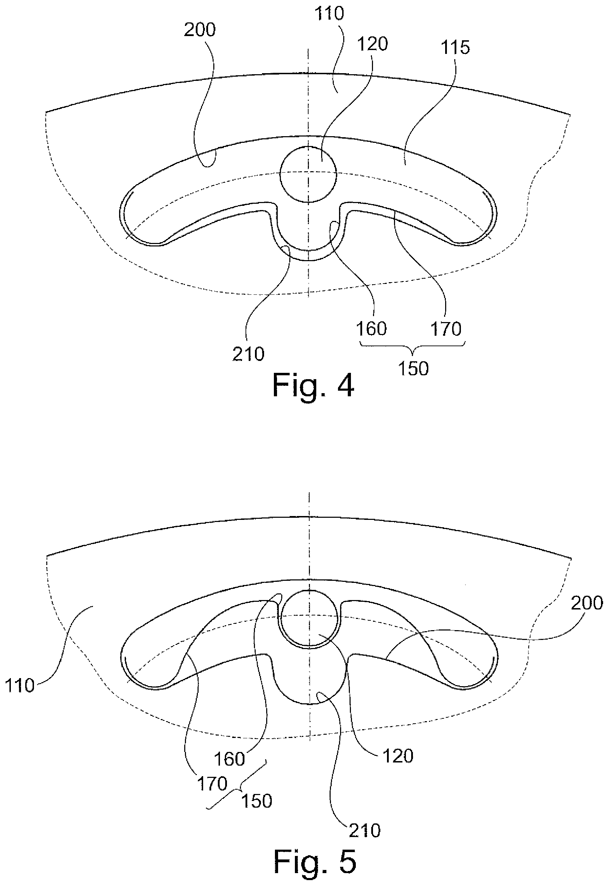

Die Figuren 4 und 5 zeigen jeweils eine schematische Detailansicht des Ausschnittes A aus Figur 1 in einer zweiten Ausführungsform, wobei die Figur 4 ersten oder zweiten Betriebszustand und die Figur 5 einen dritten Betriebszustand des Fliehkraftpendels 100 darstellt.

In dem in Figur 4 dargestellten ersten oder zweiten Betriebszustand steht oder rotiert das Fliehkraftpendel 100 mit einer geringen bis mittleren Drehzahl unterhalb einer vordefinierten zweiten Grenzdrehzahl n_2. Die Vertiefung 160 ist in seiner Lage nach radial innen verschoben und in einer Aussparung 210 der Ausschnittskontur 200 des Ausschnittes 115 aufgenommen, wodurch das Abstandselement 120 und damit die Pendelmassen 130 in ihrer Bewegung in Umfangsrichtung freigegeben sind. Die Pendelmassen 130 können ihre übliche Pendelbewegung entlang der Führungsbahnen 145 zum Ausgleich von Drehmomentschwankungen eines am Fliehkraftpendel 100 angeschlossenen Verbrennungsmotors durchführen.

In dem in Figur 5 dargestellten zweiten oder dritten Betriebszustand rotiert das Fliehkraftpendel 100 mit einer sehr hohen Drehzahl, die oberhalb der vordefinierten zweiten Grenzdrehzahl n_2 liegt, wodurch die Fliehkraft FF des Sperrelementes 150. bzw. des Federelementes 170 erhöht wird. Die Vertiefung 160 wird in seiner Lage nach radial außen verschoben, wodurch das Abstandselement 120 mit steigender Drehzahl des Fliehkraftpendels 100 in der Vertiefung 160 aufgenommen wird. Das Abstandselement 120 wird durch das Federelement 170 des Sperrelementes 150 arretiert, wodurch eine Bewegung der Pendelmassen 130 in Umfangsrichtung verhindert wird. Dadurch können die Pendelmassen 130 ihre übliche Pendelbewegung geführt durch die Führungsmittel 140 zum Ausgleich von Drehmomentschwankungen eines am Fliehkraftpendel 100 angeschlossenen Verbrennungsmotors durchführen. Auf diese Weise wird gewährleistet, dass die Pendelmassen 130 durch das Sperrelement 150 und die Arretierung des Abstandelementes 120 in seinem Pendelvorgang blockiert sind und somit bei vordefinierte Drehzahlen zum einen Mikroschwingungen der Pendelmassen 130 und damit dauerhafte Beschädigungen der Führungsbahnen 145 und/oder der Führungsmittel 145 verhindert werden können, wodurch das Fliehkraftpendel 100 langlebiger ist.

Die Figuren 6, 7 und 8 zeigen jeweils eine schematische Detailansicht des Ausschnittes A aus Figur 1 in einer dritten Ausführungsform, wobei die dritte Ausführungsform eine Kombination der ersten und der zweiten Ausführungsformen darstellt. Das Sperrelement 150 umfasst in dieser Ausführungsform ein erstes Federelemente 172 und ein zweites Federelement 174, wobei die beiden Federelemente 172, 174 jeweils eine unterschiedliche Federkraft aufweisen.

Figur 6 stellt den ersten Betriebszustand dar. Das Fliehkraftpendel 100 steht oder rotiert mit einer geringen Drehzahl unter der vordefinierten Grenzdrehzahl n_1. Das Sperrelement 150 weist in der dargestellten Ausführung ein erstes Federelement 152 mit einer ersten Vertiefung 162 und ein zweites Federelement 154 mit einer zweiten Vertiefung 164 auf. Das Abstandelement 120 befindet sich in der ersten Vertiefung 162 und wird durch das erste Federelement 172, welches sich radial außen zwischen dem Abstandselement 120 und dem Pendelflansch 110 befindet, gegenüber dem Pendelflansch 110 verspannt. Durch die Arretierung der Pendelmassen 130 wird ein Anschlagen des Abstandselements 120 bei niedrigen Drehzahlen unterhalb der Grenzdrehzahl n_1 an der Kontur des Ausschnittes 115 vermieden, wodurch das Geräuschverhalten des Fliehkraftpendels 100 verbessert wird. Die Ausschnittskontur 210 des Ausschnittes 115 weist eine erste Aussparung 212 und eine zweite Aussparung 214 auf. Das zweite Federelement 174 befindet sich radial innen zwischen dem Abstandselement 120 und dem Pendelflansch 110. Die Vertiefung 164 des zweiten Federelementes 174 ist in seiner Lage nach radial innen verschoben und in der Aussparung zweiten 214 der Ausschnittskontur 200 des Ausschnittes 115 aufgenommen.

Figur 7 stellt den zweiten Betriebszustand dar. Das Fliehkraftpendel 100 rotiert mit einer mittleren Drehzahl oberhalb der vordefinierten ersten Grenzdrehzahl n_1, aber unterhalb der vordefinierten zweiten Grenzdrehzahl n_2. Durch die steigende Fliehkraft FF wird die Vertiefung 162 des ersten Federelementes 172 in seiner Lage nach radial außen verschoben und in die erste Aussparung 212 der Ausschnittskontur 200 aufgenommen. Dabei verliert das Abstandselement 120 mit steigender Drehzahl des Fliehkraftpendels 100 den Kontakt zur ersten Vertiefung 162. Die Vertiefung 164 des zweiten Federelementes 174 befindet sich weiterhin in der zweiten Aussparung 214 der Ausschnittskontur 200 des Ausschnittes 115. In diesem zweiten Betriebszustand ist die Fliehkraft FF größer als die erste Anpresskraft FA1 des ersten Federelementes 172 aber kleiner als die zweite Anpresskraft FA2 des zweiten Federelementes 174, entsprechend wird das Abstandselement 120 weder durch das erste Federelement 172 noch durch das zweite Federelement 174 arretiert, wodurch die Pendelmassen 130 in ihrer Bewegung in Umfangsrichtung freigegeben sind.

Figur 8 stellt den dritten Betriebszustand dar. Das Fliehkraftpendel 100 rotiert mit einer hohen Drehzahl oberhalb der vordefinierten zweiten Grenzdrehzahl n_2. Das erste Federelement 172 befindet sich radial innen zwischen dem Abstandselement 120 und dem Pendelflansch 110. Die Vertiefung 162 des ersten Federelementes 172 befindet sich weiterhin in der ersten Aussparung 212 der Ausschnittskontur 200 des Ausschnittes 115. Durch die weiter angestiegene Fliehkraft FF hat sich die Vertiefung 164 des zweiten Federelementes 174 in seiner Lage nach radial außen verschoben und hat das Abstandelement 120 aufgenommen. In diesem dritten Betriebszustand verspannt das zweite Federelement 174 das Abstandselement 120 gegenüber dem Pendelflansch 110, wodurch die Pendelmassen 130 in Umfangsrichtung arretiert sind. Auf diese Weise wird zum einen ein Anschlagen des Abstandselements 120 bei sehr hohen Drehzahlen oberhalb der Grenzdrehzahl n_2 an der Kontur des Ausschnittes 115 vermieden, wodurch das Geräuschverhalten des Fliehkraftpendels 100 verbessert wird, und zum anderen werden Mikroschwingungen der Pendelmassen 130 und damit eine dauerhafte Beschädigungen der Führungsbahnen 145 und/oder der Führungsmittel 145 verhindert, wodurch das Fliehkraftpendel 100 langlebiger ist.

Die Figuren 9 und 10 zeigen jeweils eine schematische Detailansicht des Ausschnittes A aus Figur 1 in einer vierten Ausführungsform im ersten Betriebszustand des Fliehkraftpendels, wobei die Figur 9 den ersten Betriebszustand und die Figur 10 den zweiten oder dritten Betriebszustand des Fliehkraftpendels 100 darstellt.

In dem in Figur 9 dargestellten ersten Betriebszustand steht oder rotiert das Fliehkraftpendel 100 mit einer geringen Drehzahl unter der vordefinierten Grenzdrehzahl n_1. Das Sperrelement 150 weist zusätzlich zum Federelement 170 eine Zusatzmasse 180 auf. Die Zusatzmasse 180 weist in axialer Richtung einer Breite auf, die im Wesentlichen der Breite des Ausschnittes 115 entspricht. Radial innenseitig weist die Zusatzmasse 180 die Vertiefung 160 auf, in der das Abstandselement 120 aufgenommen ist. Radial außenseitig wird die Zusatzmasse 180 durch das Federelement 170 begrenzt. Die Ausschnittskontur 200 des Ausschnittes 115 weist im dargestellten Ausführungsbeispiel nach radial außen eine Öffnung 202 auf, wobei das Federelement 170 mittels zweier Verbindungsmittel 190, beispielsweise eine Schraube, derart mit dem Pendelflansch 110 verbunden ist. Auf diese Weise ist das Federelement 170 in Umfangsrichtung fixiert. Das Sperrelement 150 begrenzt somit über das Federelement 170 und über die Zusatzmasse 180 den Ausschnitt 115 des Pendelflansches 110 nach radial außen und zumindest teilweise in Umfangsrichtung. Somit ist die Zusatzmasse 180 radial zwischen den Abstandelement 120 und dem Federelement 170 angeordnet, wobei die Zusatzmasse 180 über ein zweites Verbindungsmittel 192, beispielsweise eine Schraube, mit dem Federelement 170 verbunden ist. Dadurch wird ein Verkippen des Sperrelementes 150, bzw. des Federelementes 170 und/oder der Zusatzmasse 180 vermieden. Selbstverständlich ist auch denkbar, dass die Zusatzmasse 180 andersartig mit dem Federelement 170, bzw. mit dem Pendelflansch 110 verbundne ist. Grundsätzlich sind sowohl lösbare Verbindungen, wie zum Beispiel Schraubverbindung oder Klettverschluss als auch nicht lösbare Verbindungen wie beispielsweise ein Nietverbindung, eine Schweißverbindung oder eine Klebeverbindung umsetzbar, wobei als Verbindungsmittel 190, 192 im Sinne der vorliegenden Erfindung insbesondere Clipse, auch in Form von clipartigen Verbindungselementen oder Klemm-Muttern, aber auch Schrauben, Nieten, Muttern, Bolzen verwendet werden können. Auf diese Weise kann eine einfache Lagesicherung des Sperrelementes 150 und/oder der Zusatzmasse 180 gewährleistet werden.

Wie in der Figur 9 dargestellt, befindet sich das Abstandelement 120 in der Vertiefung 160 der Zusatzmasse 180, wobei das Federelement 170 die Zusatzmasse 180 und dadurch auch das Abstandselement 120 gegenüber dem Pendelflansch 110 verspannt. Durch das Federelement 170 wird eine erste Anpresskraft FA1 bereitgestellt, mit der die Zusatzmasse 180 das Abstandselement 120 in die Vertiefung 160 presst, das Abstandselement 120 in der Vertiefung 160 arretiert und eine Pendelbewegung der Pendelmassen 130 in Umfangsrichtung verhindert wird.

In dem in Figur 10 dargestellten zweiten oder dritten Betriebszustand rotiert das Fliehkraftpendel 100 mit einer mittleren bis sehr hohen Drehzahl, die oberhalb der ersten vordefinierten Grenzdrehzahl n_1 liegt, wodurch die Fliehkraft FF der Zusatzmasse 180 Sperrelementes 150 erhöht wird. Steigt die Fliehkraft FF über die Anpresskraft FA1 des Federelements 170, wird die Lage der Vertiefung 160 nach radial außen verschoben, wodurch das Abstandselement 120 freigegeben und die Arretierung der Pendelmassen 130 aufgehoben wird. Die Pendelmassen 130 können ihre durch die Führungsmittel 140 und Führungsbahnen 145 geführte Pendelbewegung zum Ausgleich von Drehmomentschwankungen eines am Fliehkraftpendel 100 angeschlossenen Verbrennungsmotors durchführen. Ein Anstoßen der Pendelmassen 130 am Pendelflansch 110 und/oder ein Aneinanderstoßen der in Umfangsrichtung benachbarten Stirnseiten der Pendelmassen 130 und/oder ein Anstoßen der Führungsmittel 140 in den betreffenden Längsenden der Führungsbahnen 145 des Pendelflansches 110 und/oder der Pendelmassen 130 und dadurch Funktionsstörungen des Fliehkraftpendels 100 und Geräusche können verhindert werden, wodurch das Fliehkraftpendel 100 insgesamt geräuschärmer und langlebiger ist. Durch die Zusatzmasse 180 wird gewährleistet, dass zum einen bei der Verwendung eines Federelementes 170 mit einer sehr hohen Anpresskraft FA1 als auch bei sehr niedrigen Drehzahlen eine Fliehkraft FF bereit gestellt werden kann, die bei Überschreitung der ersten Grenzdrehzahl n_1 die Anpresskraft FA1 des Federelements 170 aufhebt bzw. größer ist. Ferner kann dadurch auch bei einem schwankenden Drehmoment dieses in gewohnter Weise durch das Fliehkraftpendel 100 gedämpft werden. Insbesondere kann mittels der Zusatzmasse 180 die Grenzdrehzahl n_1, bei der das Sperrelement 180 die Pendelmassen 130 abgesenkt werden.

Die in der Figur 11 dargestellte fünften Ausführungsform unterscheidet sich von der in der Figur 9 dargestellten vierten Ausführungsform lediglich dahingehend, dass das Federelement 170 andersartig ausgestaltet ist. Das Fliehkraftpendel 100 befindet sich im ersten Betriebszustand und steht oder rotiert mit einer geringen Drehzahl unter der vordefinierten Grenzdrehzahl n_1. Durch das Ausführungsbeispiel in Figur 11 soll verdeutlicht werden, dass das Sperrelement 150 und damit sowohl das Federelement 170 als auch die Zusatzmasse 180 oder das Abstandselement 120 oder die Vertiefung 160 auch andersartig ausgebildet sein können als in den dargestellten Ausführungsbeispielen. Dabei ist auch eine asymmetrische Ausgestaltung des Sperrelementes 150 zu der Längsachse des Ausschnittes 115 denkbar.

Die Erfindung ist nicht auf die beschriebenen Ausführungsbeispiele beschränkt, sondern umfasst auch gleichwirkende weitere Ausführungsformen. Die Figurenbeschreibung dient lediglich dem Verständnis der Erfindung. Die Erfindung wird durch die Ansprüche definiert.

### Bezugszeichenliste

- 100: Fliehkraftpendel
- 110: Pendelflansch
- 115: Ausschnitt
- 120: Verbindungselement
- 130: Pendelmasse
- 140: Führungsmittel
- 145: Führungsbahn
- 150: Sperrelement
- 160: Vertiefung
- 162: erste Vertiefung
- 164: zweite Vertiefung
- 170: Federelement
- 172: erstes Federelement
- 174: zweites Federelement
- 180: Zusatzmasse
- 190: erstes Verbindungsmittel
- 192: zweites Verbindungsmittel
- 200: Ausschnittskontur
- 202: Öffnung
- 210: Aussparung
- 212: erste Aussparung
- 214: zweite Aussparung
- F_{F}: Fliehkraft
- F_{A1}: erste Anpresskraft
- F_{A2}: Zweite Anpresskraft
- A: Ausschnitt
- x: Drehachse
- n_1: erste Grenzdrehzahl
- n_2: zweite Grenzdrehzahl

## Patentansprüche

1. Fliehkraftpendel (100) mit einem um eine Drehachse (x) verdrehbaren Pendelflansch (110) und wenigstens einer Pendelmasse (130), wobei
- wenigstens ein Führungsmittel (140) vorgesehen ist, das wenigstens einen am Pendelflansch (110) angeordneten Ausschnitt (115) umfasst, wobei
- das Führungsmittel (140) ausgebildet ist, die Pendelmasse (130) in einer Pendelbewegung an dem Pendelflansch (110) begrenzt bewegbar zu führen, wobei
- wenigstens ein Sperrelement (150) vorgesehen ist, und wobei
- das Sperrelement (150) in Abhängigkeit von einer vordefinierten Drehzahl des Pendelflansches (110) die Pendelmasse (130) mit dem Pendelflansch (110) in Umfangsrichtung arretiert und eine Pendelbewegung der Pendelmasse (130) relativ zum Pendelflansch (110) in Abhängigkeit der vordefinierten Drehzahl zumindest teilweise verhindert, **dadurch gekennzeichnet dass** das Führungsmittel (140) wenigstens ein Verbindungselement (120), vorzugsweise ein Abstandselement umfasst und wenigstens zwei am Pendelflansch (110) in axialer Richtung gegenüberliegend angeordnete Pendelmassen (130) über das Führungsmittel (140) miteinander verbundenen sind, wobei das Sperrelement (150) das Verbindungselement (120) mit dem Pendelflansch (110) in Umfangsrichtung arretiert, wobei das Sperrelement (150) unterhalb einer ersten Grenzdrehzahl (n_1) des Pendelflansches das Verbindungselement (120) mit dem Pendelflansch (110) in Umfangsrichtung arretiert und das Verbindungselement (120) bei Überschreiten der ersten Grenzdrehzahl (n_1) freigibt.

2. Fliehkraftpendel (100) nach Anspruch 1, wobei die Arretierung des Verbindungselement (120) zwischen der Pendelmasse (130) mit dem Pendelflansch (110) erfolgt.

3. Fliehkraftpendel (100) nach Anspruch 2, wobei das Sperrelemente (150) eine Vertiefung (160) aufweist, wobei die Vertiefung (160) zur Aufnahme des Verbindungselementes (120) ausgebildet ist.

4. Fliehkraftpendel (100) nach einem der Ansprüche 1 bis 3, wobei das Sperrelement (150) zumindest teilweise im Ausschnitt (115) angeordnet ist.

5. Fliehkraftpendel (100) nach Anspruch 3 oder 4, **dadurch gekennzeichnet, dass** die Vertiefung (160) in Umfangsrichtung in mittiger Lage des Ausschnittes (115) des Pendelflansches angeordnet ist.

6. Fliehkraftpendel (100) nach einem der Ansprüche 3 bis 5, wobei das Sperrelement (150) wenigstens ein Federelement (170) umfasst, wobei das Federelement (170) dazu ausgebildet ist, die Vertiefung (160) auf das Verbindungselement (120) zu pressen, wobei in Abhängigkeit der Drehzahl des Pendelflansches (110) das Federelement (170) die Verpressung aufhebt und die Lage der Vertiefung (160) des Sperrelementes (150) in radialer Richtung verändert.

7. Fliehkraftpendel (100) nach einem der Ansprüche 1 bis 6; wobei das Sperrelement (150) wenigstens eine Zusatzmasse (180) umfasst.

8. Fliehkraftpendel (100) nach Anspruch 7, wobei die Zusatzmasse (180) zwischen dem Federelement (170) und dem Verbindungselement (120) angeordnet ist, wobei vorzugsweise die Vertiefung (160) zur Aufnahme des Verbindungselementes (120) zumindest teilweise in der Zusatzmasse (180) angeordnet ist.

9. Fliehkraftpendel (100) nach einem der Ansprüche 1 bis 8, wobei das Sperrelement (150) oberhalb einer zweiten Grenzdrehzahl (n_2) des Pendelflansches (110) das Verbindungselement (120) mit dem Pendelflansch (110) in Umfangsrichtung arretiert und das Verbindungselement (120) bei Unterschreiten der zweiten Grenzdrehzahl (n_2) freigibt.

10. Fliehkraftpendel (100) nach einem der Ansprüche 1 bis 9, wobei das Sperrelement (150) über wenigstens ein erstes Verbindungsmittel (190) an dem Pendelflansch (110) befestigt ist und/oder über wenigstens ein zweites Verbindungsmittel (192) mit der Zusatzmasse (180) verbunden ist.

11. Fliehkraftpendel (100) nach einem der Ansprüche 5 bis 12, wobei der Ausschnitt (115) des Pendelflansches (110) eine Ausschnittskontur (200) aufweist, wobei die Ausschnittskontur (200) wenigstens eine Aussparung (210) zur Aufnahme der Vertiefung (160) des Sperrelementes (150) aufweist.

## Claims

1. Centrifugal force pendulum (100) having a pendulum flange (110) which can be rotated about a rotational axis (x) and at least one pendulum mass (130),
- at least one guide means (140) being provided which comprises at least one cut-out (115) which is arranged on the pendulum flange (110),
- the guide means (140) being configured to guide the pendulum mass (130) such that it can be moved to a limited extent in a pendulum movement on the pendulum flange (110),
- at least one locking element (150) being provided, and
- the locking element (150) locking the pendulum mass (130) with the pendulum flange (110) in the circumferential direction in a manner which is dependent on a predefined rotational speed of the pendulum flange (110), and at least partially preventing a pendulum movement of the pendulum mass (130) relative to the pendulum flange (110) in a manner which is dependent on the predefined rotational speed, **characterized in that**
the guide means (140) comprises at least one connecting element (120), preferably a spacer element, and at least two pendulum masses (130) which are arranged so as to lie opposite one another in the axial direction on the pendulum flange (110) are connected to one another via the guide means (140), the locking element (150) locking the connecting element (120) with the pendulum flange (110) in the circumferential direction, the locking element (150) locking the connecting element (120) with the pendulum flange (110) in the circumferential direction below a first limit rotational speed (n_1) of the pendulum flange, and releasing the connecting element (120) if the first limit rotational speed (n_1) is exceeded.

2. Centrifugal force pendulum (100) according to Claim 1, the locking of the connecting element (120) with the pendulum flange (110) taking place between the pendulum masses (130).

3. Centrifugal force pendulum (100) according to Claim 2, the locking element (150) having a depression (160), the depression (160) being configured for receiving the connecting element (120).

4. Centrifugal force pendulum (100) according to one of Claims 1 to 3, the locking element (150) being arranged at least partially in the cut-out (115).

5. Centrifugal force pendulum (100) according to Claim 3 or 4, **characterized in that** the depression (160) is arranged in the circumferential direction in a central position of the cut-out (115) of the pendulum flange.

6. Centrifugal force pendulum (100) according to one of Claims 3 to 5, the locking element (150) comprising at least one spring element (170), the spring element (170) being configured to press the depression (160) onto the connecting element (120), the spring element (170) cancelling the pressing action in a manner which is dependent on the rotational speed of the pendulum flange (110) and changing the position of the depression (160) of the locking element (150) in the radial direction.

7. Centrifugal force pendulum (100) according to one of Claims 1 to 6, the locking element (150) comprising at least one additional mass (180).

8. Centrifugal force pendulum (100) according to Claim 7, the additional mass (180) being arranged between the spring element (170) and the connecting element (120), the depression (160) for receiving the connecting element (120) preferably being arranged at least partially in the additional mass (180).

9. Centrifugal force pendulum (100) according to one of Claims 1 to 8, the locking element (150) locking the connecting element (120) with the pendulum flange (110) in the circumferential direction above a second limit rotational speed (n_2) of the pendulum flange (110), and releasing the connecting element (120) if the second limit rotational speed (n_2) is undershot.

10. Centrifugal force pendulum (100) according to one of Claims 1 to 9, the locking element (150) being fastened to the pendulum flange (110) via at least one first connecting means (190) and/or being connected to the additional mass (180) via at least one second connecting means (192).

11. Centrifugal force pendulum (100) according to one of Claims 5 to 12, the cut-out (115) of the pendulum flange (110) having a cut-out contour (200), the cut-out contour (200) having at least one cut-out (210) for receiving the depression (160) of the locking element (150).

## Revendications

1. Pendule centrifuge (100) comprenant un flasque de pendule (110) pouvant tourner autour d'un axe de rotation (x) et au moins une masse pendulaire (130), dans lequel
- au moins un moyen de guidage (140) est prévu, lequel comporte au moins une découpe (115) disposée sur le flasque de pendule (110), dans lequel
- le moyen de guidage (140) est conçu pour guider, de manière mobile et limitée, la masse pendulaire (130) suivant un déplacement pendulaire sur le flasque de pendule (110), dans lequel
- au moins un élément d'arrêt (150) est prévu, et dans lequel
- l'élément d'arrêt (150) bloque la masse pendulaire (130) sur le flasque de pendule (110) dans la direction périphérique en fonction d'une vitesse de rotation prédéfinie du flasque de pendule (110) et empêche au moins partiellement un déplacement pendulaire de la masse pendulaire (130) par rapport au flasque de pendule (110) en fonction de la vitesse de rotation prédéfinie, **caractérisé en ce que** le moyen de guidage (140) comporte au moins un élément de liaison (120), de préférence un élément d'espacement, et au moins deux masses pendulaires (130) disposées en regard dans la direction axiale sur le flasque de pendule (110) sont reliées les unes aux autres par le biais du moyen de guidage (140), l'élément d'arrêt (150) bloquant l'élément de liaison (120) sur le flasque de pendule (110) dans la direction périphérique, l'élément d'arrêt (150) bloquant l'élément de liaison (120) sur le flasque de pendule (110) dans la direction périphérique en dessous d'une première vitesse de rotation limite (n_1) du flasque de pendule et libérant l'élément de liaison (120) en cas de dépassement de la première vitesse de rotation limite (n_1).

2. Pendule centrifuge (100) selon la revendication 1, dans lequel le blocage de l'élément de liaison (120) entre les masses pendulaires (130) s'effectue à l'aide du flasque de pendule (110).

3. Pendule centrifuge (100) selon la revendication 2, dans lequel l'élément d'arrêt (150) comprend un renfoncement (160), le renfoncement (160) étant conçu pour recevoir l'élément de liaison (120).

4. Pendule centrifuge (100) selon l'une quelconque des revendications 1 à 3, dans lequel l'élément d'arrêt (150) est disposé au moins partiellement dans la découpe (115).

5. Pendule centrifuge (100) selon la revendication 3 ou 4, **caractérisé en ce que** le renfoncement (160) est disposé dans la direction périphérique dans la position centrale de la découpe (115) du flasque de pendule.

6. Pendule centrifuge (100) selon l'une quelconque des revendications 3 à 5, dans lequel l'élément d'arrêt (150) comporte au moins un élément ressort (170), dans lequel l'élément ressort (170) est conçu pour presser le renfoncement (160) sur l'élément de liaison (120), dans lequel, en fonction de la vitesse de rotation du flasque de pendule (110), l'élément ressort (170) supprime la compression et modifie la position du renfoncement (160) de l'élément d'arrêt (150) dans la direction radiale.

7. Pendule centrifuge (100) selon l'une quelconque des revendications 1 à 6, dans lequel l'élément d'arrêt (150) comporte au moins une masse supplémentaire (180).

8. Pendule centrifuge (100) selon la revendication 7, dans lequel la masse supplémentaire (180) est disposée entre l'élément ressort (170) et l'élément de liaison (120), dans lequel le renfoncement (160) servant à recevoir l'élément de liaison (120) est disposé de préférence au moins partiellement dans la masse supplémentaire (180).

9. Pendule centrifuge (100) selon l'une quelconque des revendications 1 à 8, dans lequel l'élément d'arrêt (150) bloque l'élément de liaison (120) sur le flasque de pendule (110) dans la direction périphérique au-dessus d'une deuxième vitesse de rotation limite (n_2) du flasque de pendule (110) et libère l'élément de liaison (120) lorsque l'on passe en dessous de la deuxième vitesse de rotation limite (n_2).

10. Pendule centrifuge (100) selon l'une quelconque des revendications 1 à 9, dans lequel l'élément d'arrêt (150) est fixé au flasque de pendule (110) par le biais d'au moins un premier élément de liaison (190) et/ou est relié à la masse supplémentaire (180) par le biais d'au moins un deuxième élément de liaison (192) .

11. Pendule centrifuge (100) selon l'une quelconque des revendications 5 à 12, dans lequel la découpe (115) du flasque de pendule (110) présente un contour de découpe (200), dans lequel le contour de découpe (200) comprend au moins un évidement (210) servant à recevoir le renfoncement (160) de l'élément d'arrêt (150).
